# EUROPEAN PATENT APPLICATION

(11) **EP 4 573 984 A1**
(43) Date of publication of application: **25.06.2025**
(21) Application number: 23218697.3
(22) Date of filing: 20.12.2023
(51) Int. Cl.: A47J 31/44, A47J 31/52

(54) **MILK FROTHER, BEVERAGE MACHINE AND MILK FROTHING METHOD**

(71) Applicant: Versuni Holding B.V., 5656 AE Eindhoven (NL)
(72) Inventor: VEENING, Christiaan Caspar Eduard, 5656 AE Eindhoven (NL)
(74) Representative: Vollering, Stefanus Franciscus Maria

(57) **Abstract**

Provided is a milk frother (100) comprising a chamber (102) for receiving milk to be frothed, and a milk frothing system for frothing the milk received in the chamber. The milk frother includes a pressure control system (112) for adjusting pressure in the chamber. Further provided is a beverage machine comprising the milk frother, and a method of frothing milk.

## Description

### FIELD OF THE INVENTION

The invention relates to a milk frother and a beverage machine, such as a coffee machine, comprising such a milk frother. The invention further relates to a method of frothing milk.

### BACKGROUND OF THE INVENTION

A milk frother is a device which changes the texture of milk, by introducing bubbles, typically via an aeration process, into the milk. The bubbles introduced into the milk may create a foam-like texture. Various different types of milk frother are known.

Some milk frothers work with a steam jet that is forced through a Venturi restriction. This results in a local pressure drop just downstream of the restriction. This pressure drop causes air to be drawn into, and mixed with, the milk. The resulting frothed milk may have relatively small bubbles and can be relatively easily poured. This may be referred to as "barista foam". Whilst milk frothed in this way can be desirable, e.g. for certain types of beverage, such as lattes and hot chocolate, the use of steam to froth the liquid may place certain limitations on characteristics of the frothed milk. For example, the process inherently provides hot frothed milk.

Other types of milk frother make use of an agitator that introduces bubbles into the milk via agitation of the milk, e.g. using a whisking-type action. The milk may, for example, be heated at the same time as being agitated, or cold froth can be prepared by refraining from heating the milk during agitation. Frothing milk in this way tends to afford a relatively thick foam that may be less easy to pour than the above-mentioned "barista foam".

### SUMMARY OF THE INVENTION

It would be desirable to provide a milk frother and method of milk frothing that enable enhanced control over characteristics of the frothed milk, for example to enable preparation of frothed milk in various forms and/or without limitation in terms of the temperature of the frothed milk.

The invention is defined by the claims.

According to examples in accordance with an aspect of the invention, there is provided a milk frother comprising: a chamber for receiving milk; a milk frothing system for frothing the milk received in the chamber; and a pressure control system for adjusting pressure in the chamber, wherein the chamber is sealable to enable the pressure control system to adjust pressure in the sealed chamber.

The milk frothing system may operate to entrap gas, e.g. air, into the milk received in the chamber.

By the chamber being sealable, adjusting pressure in the sealed container can provide enhanced control over characteristics of the frothed milk compared to conventional agitator-comprising milk frothers. For example, the nature, e.g. size, of bubbles in the frothed milk can be controlled due to the pressure adjustment made possible by the combination of a sealable chamber and a pressure control system for adjusting pressure in the sealed chamber.

The milk frothing system may have any suitable design provided that the milk frothing system is able to froth milk.

In some embodiments, the milk frothing system comprises a mechanical milk frothing system. The mechanical milk frothing system may have any suitable design provided that the milk frothing system is able to froth milk via mechanical movement(s) of the mechanical milk frothing system. By employing specifically a mechanical milk frothing system, the milk frother may not be limited in terms of the temperature of the frothed milk (as might be the case with other types of milk frothing systems, for instance milk frothing systems that employ a steam jet to froth milk).

In some embodiments, the mechanical milk frothing system comprises an agitator moveable inside the chamber to froth milk.

Such an agitator may, for example, be moveable inside the chamber at least when the chamber is sealed.

In this manner, the agitator may froth the milk received in the chamber while the pressure is adjusted via the pressure control system.

Alternatively or additionally, the mechanical milk frothing system may include an actuator coupled to a chamber wall that at least partly delimits the chamber, with the actuator being configured to move, e.g. vibrate, the chamber wall to froth the milk received in the chamber.

In some embodiments, the chamber may be at least partly delimited by a moveable chamber wall that includes an integrated turbulence-creating geometry for creating turbulence in the milk received in the chamber when the chamber wall is moved.

For example, the chamber wall may be rotatable, e.g. spinnable, and a feature statically mounted inside the chamber may have a turbulence-creating geometry for creating turbulence in the milk received in the chamber when the chamber wall is rotated.

The feature can have any suitable shape provided that the feature is able to create, when the chamber wall is rotated, turbulence in the milk for frothing the milk.

In some embodiments, the feature comprises a helical, e.g. spring-like structure, upwardly protruding from a base of the chamber.

In some embodiments, the pressure control system is configured to enable user-selection of different pressures in the chamber, e.g. in the sealed chamber. By permitting the user to select the pressure in the chamber, e.g. the sealed chamber, the user may be provided with enhanced control over the characteristics of the frothed milk. In this way, the user may be enabled to, for example, select the characteristics of the frothed milk according to the type of beverage they wish to make, for example latte, cappuccino, flat white, and so on.

The pressure control system may include a pump, such as a vacuum pump, operable to adjust the pressure in the sealed chamber. Such a pump, e.g. vacuum pump, may be operable to provide an under-pressure in the sealed chamber. This may be achieved by displacing gas, e.g. air, to create a lower pressure inside the chamber.

The pump, e.g. vacuum pump, may have any suitable design. For example, the pump may be manually or electrically operable to adjust the pressure in the sealed chamber.

It is noted that the term "under-pressure" is intended to refer to a partial vacuum in the sealed chamber, e.g. in a head space above milk received in the sealed chamber.

In such embodiments, the characteristics of the frothed milk may be controllable by operating the milk frothing system while the under-pressure is provided in the sealed chamber to provide frothed milk, with subsequent release of the under-pressure causing densification of the frothed milk, e.g. so as to provide a foam at ambient pressure having smaller bubbles. In this manner, milk foam may be prepared that is more pourable than that produced by conventional agitator-comprising milk frothers.

The pressure control system, e.g. the pump thereof, may be operable to provide a pressure in the chamber, e.g. in the sealed chamber, that is less than 1 bar absolute, preferably between 0.01 and 0.95 bar absolute, more preferably between 0.1 and 0.8 bar absolute, and most preferably between 0.1 and 0.5 bar absolute. Enhanced control over characteristics of, e.g. bubble size in, the frothed milk has been found by employing such pressures in the chamber.

In some embodiments, the milk frother comprises a pressure release system controllable to release the pressure in the chamber, for example following frothing while the pressure control system is providing an adjusted pressure in the chamber.

The pressure release system may enable release of an over-pressure or an under-pressure provided in the chamber by the pressure control system.

In some embodiments, the milk frother comprises an under-pressure release system controllable to release the under-pressure, e.g. following operation of the milk frothing system while the under-pressure is provided in the chamber, e.g. the sealed chamber. The under-pressure release system may, for example, include a valve, e.g. a manually operable valve, that is controllable to introduce gas, e.g. ambient air, into the chamber.

Alternatively or additionally, the under-pressure release system may include a control system configured to control the pump to pump gas, e.g. air, back into the chamber. This may be achievable by, for example, the control system reversing polarity of an electrical motor that drives the pump.

Irrespective of precisely how it is implemented, this under-pressure release may facilitate opening of the chamber to access the frothed milk as well as causing densification of the frothed milk.

In some embodiments, the pressure control system comprises an expandable container in fluid communication with the chamber, e.g. the sealed chamber, with expansion of the container causing reduction of pressure in the chamber. This may provide a relatively straightforward way of adjusting the pressure in the chamber. Moreover, the under-pressure in the chamber, e.g. in the sealed chamber, may be user-selectable by controlling a degree of expansion of the container.

The expandable container may, for example, be defined by a tube, e.g. a syringe barrel, and a plunger that is moveable along the tube.

In such embodiments, the pressure control system may further comprise a valve assembly, e.g. comprising a pair of check valves, to enable expansion of the container to be adjusted in order to enable selection of the under-pressure in the sealed chamber, e.g. by moving the plunger along the tube.

This may provide a relatively straightforwardly implementable way of configuring the pressure control system to enable user-selection of different pressures in the chamber, e.g. in the sealed chamber.

In some embodiments, the pressure control system comprises a pressure measurement device for indicating pressure in the chamber, e.g. in the sealed chamber. The pressure measurement device may provide an indication of characteristics of the frothed milk, e.g. foam, being prepared by the milk frother.

For example, the output of the pressure measurement device may provide an indicator of foam structure. This may be due to the pressure measurement device indicating a difference in pressure between the inside of the sealed chamber and the atmosphere in which the milk frother is being used, which difference in pressure may determine the nature, e.g. size, of the bubbles in the frothed milk provided following release of the pressure.

Alternatively or additionally, the output provided by the pressure measurement device may be used as a basis on which to adjust the pressure, e.g. under-pressure, provided in the chamber, e.g. in the sealed chamber.

Any suitable type of pressure measurement device may be employed for this purpose. In some embodiments, the pressure measurement device comprises a manometer.

In embodiments in which the chamber is partly delimited by the chamber wall, e.g. in the form of a jug, the milk frother may also include a closing member, e.g. in the form of a lid for the jug, that is moveable relative to the chamber wall to enable the chamber to be opened and closed.

It is noted at this point that the chamber can be sealed in any suitable manner in order to enable pressure adjustment in the chamber. In some embodiments, a sealing member, e.g. comprising one or more O-rings, flat gasket(s), etc., is interposed between the chamber wall and the closing member to seal the chamber when the closing member is positioned to close the chamber.

In some embodiments, the milk frother comprises a temperature control system for controlling temperature in the chamber. The temperature control system may, for example, be configured to heat the chamber. By heating the chamber, the milk may be warmed at the same time as, prior to, or even after being frothed. Milk that is both frothed and warm may be desirable to include, for example, in a coffee beverage, such as a latte, cappuccino, flat white, and so on.

The milk may, for instance, be frothed without being heated, to prepare cold froth, or may be frothed while being heated to produce hot froth.

In embodiments in which the milk is frothed while being heated, and the under-pressure is provided in the chamber, hot gas, e.g. air, expansion may result in the eventual pressure drop being lower. Hence the bubble size may change less upon release of the under-pressure with respect to the scenario in which cold froth is prepared.

To address this potential issue, the milk may be heated prior to frothing, and/or only partially heated for optimal frothing performance of the milk, according to different milk types, and so on.

Hence in some embodiments, the temperature control system is configured to heat the chamber prior to the pressure control system being operated to adjust the pressure in the chamber, e.g. sealed chamber, for example by providing the under-pressure in the sealed chamber.

In such embodiments, the milk frothing system may then be operated to froth the milk while the pressure is adjusted, e.g. by the under-pressure being provided, in the sealed chamber.

This sequence of operations by the temperature control system, the pressure control system and the milk frothing system may, for example, be automatically implemented by the milk frother.

For example, the temperature control system may be controlled to heat the milk received inside the chamber to 65°C, and then, e.g. automatically, the pressure control system may operate to provide the under-pressure in the sealed chamber. In such an example, the milk frothing system may, for instance, be operated, e.g. automatically, to froth the milk while the under-pressure is provided in the sealed chamber.

According to another aspect there is provided a beverage machine comprising the milk frother according to any of the embodiments described herein.

Such a beverage machine may, for example, include, in addition to the milk frother, a preparation chamber in which water, e.g. hot water, may be combined with a raw material, e.g. food ingredients, such as ground coffee.

In some embodiments, the beverage machine comprises coffee brewing apparatus. In such embodiments, frothed milk, prepared by the milk frother may be combined with coffee brewed by the coffee brewing apparatus in a coffee beverage produced by the beverage machine.

According to a further aspect there is provided a method of frothing milk comprising: receiving milk to be frothed in a chamber; adjusting pressure in the chamber; and frothing the milk by agitating the milk in the chamber in which the pressure is adjusted. These steps can be implemented in any suitable order.

The method may comprise sealing the chamber so that the pressure is adjusted in the sealed chamber.

Alternatively or additionally, the frothing may comprise using a mechanical milk frothing system to froth the milk.

The method may be implemented using the milk frother according to any of the embodiments described herein.

In some embodiments, adjusting the pressure in the chamber, e.g. in the sealed chamber, comprises providing an under-pressure in the chamber.

In some embodiments, the method comprises releasing the under-pressure following the frothing of the milk. Release of the under-pressure may cause densification of the frothed milk already prepared by agitating the milk while the under-pressure is provided in the sealed chamber, e.g. so as to provide a foam at ambient pressure having smaller bubbles. In this manner, more pourable foam may be prepared, as previously described.

More generally, embodiments described herein in relation to the milk frother may be applicable to the method of frothing milk and embodiments described herein in relation to the method of frothing milk may be applicable to the milk frother.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
FIG. 1 schematically depicts a milk frother according to an example;
FIGs. 2A to 2C schematically depict steps in an exemplary method of frothing milk; and
FIG. 3 provides a flow chart of a method of frothing milk according to an example.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Provided is a milk frother comprising a chamber for receiving milk to be frothed, and a milk frothing system for frothing the milk received in the chamber. The milk frother includes a pressure control system for adjusting pressure in the chamber. Further provided is a beverage machine comprising the milk frother, and a method of frothing milk.

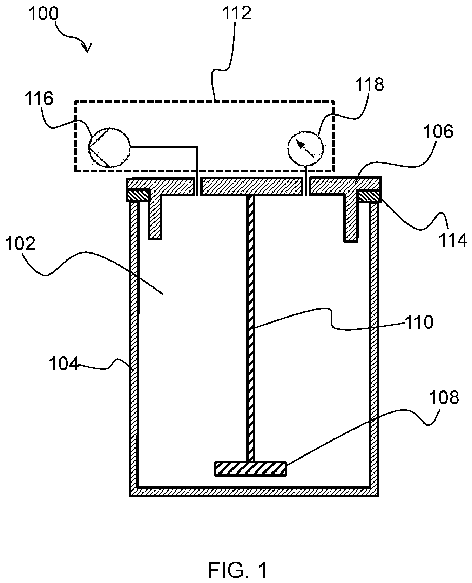

FIG. 1 schematically depicts a milk frother 100 according to an example. In some embodiments, such as shown in FIG. 1, the milk frother 100 is a standalone milk frother 100. Alternatively, the milk frother 100 may be included in a beverage machine, e.g. a coffee machine.

Such a beverage machine may, for example, include, in addition to the milk frother 100, a preparation chamber in which water, e.g. hot water, may be combined with a raw material, such as ground coffee.

A non-limiting example of such a beverage machine is a fully automatic coffee machine comprising a coffee grinding stage for grinding coffee, a brew chamber for receiving ground coffee from the coffee grinding stage, and a hot water supply system for delivering hot water to the brew chamber.

In such an example, milk frothed by the milk frother 100 may be manually or automatically dispensed to provide a beverage comprising coffee brewed in the brew chamber and milk frothed by the milk frother 100.

The milk frother 100 comprises a chamber 102, e.g. a sealable chamber 102, for receiving milk to be frothed (not visible in FIG. 1). The chamber 102 may be delimited by a chamber wall 104 and a closing member 106 that is moveable relative to the chamber wall 104 to enable the chamber 102 to be opened and closed. When the closing member 106 is moved to open the chamber 102, milk may be received in the chamber 102 for frothing. By then moving the closing member 106 to close the chamber 102, the chamber 102 may be sealed with the milk inside the chamber 102.

In some embodiments, such as shown in FIG. 1, the closing member 106 is in the form of a lid and the chamber wall 104 is in the form of a jug that can be closed by the lid. The closing member 106, e.g. lid, may be moveable in any suitable manner in order to enable the chamber 102 to be opened and closed.

In some embodiments, the closing member 106, e.g. lid, is detachable from the chamber wall 104. Alternatively, the closing member 106, e.g. lid, may be pivotably mounted to the chamber wall 104 such that the chamber 102 may be opened and closed by pivoting of the closing member 106.

More generally, the milk frother 100 comprises a milk frothing system for frothing the milk, received in the chamber 102. In some embodiments, the milk frothing system comprises, e.g. is, a mechanical milk frothing system for frothing the milk, received in the chamber 102.

The mechanical milk frothing system may have any suitable design provided that the mechanical milk frothing system is able to froth milk, via mechanical movement(s) of the mechanical milk frothing system. In some embodiments, such as shown in FIG. 1, the mechanical milk frothing system comprises an agitator 108 moveable inside the chamber 102 to froth milk.

The agitator 108 may have any suitable design provided that the agitator's 108 movement is capable of frothing the milk, received in the chamber 102.

In at least some embodiments, the milk frother 100 comprises a motor (not visible) for driving movement, e.g. rotation, of the agitator 108. The motor may, for example, be supported by the chamber wall 104 or the closing member 106.

The agitator 108 may be coupled to the motor in any suitable manner. In some embodiments, such as shown in FIG. 1, a spindle 110 may extend from the motor, e.g. mounted in the closing member 106, to the agitator 108. Alternatively, the motor and the agitator 108 may be coupled to each other in a contactless manner, e.g. via a magnetic coupling.

In some embodiments, the agitator 108 is rotatable, e.g. by the motor, to create a vortex.

As an alternative or in addition to the agitator 108, the mechanical milk frothing system may include an actuator coupled to the chamber wall 104 with the actuator being configured to move, e.g. vibrate, the chamber wall 104 to froth the milk received in the chamber 102. The actuator may for instance comprise a piezoelectric actuator.

In some embodiments, the chamber 102 may be at least partly delimited by a moveable chamber wall 104 that includes an integrated turbulence-creating geometry for creating turbulence in the milk received in the chamber 102 when the chamber wall 104 is moved.

In some embodiments, the milk frother 100 comprises a temperature control system (not visible) for controlling temperature in the chamber 102 during frothing. The temperature control system may, for example, be configured to heat the chamber 102. By heating the chamber 102, the milk may be warmed at the same time as, prior to, or even after being frothed. Milk that is both frothed and warm may be desirable to include, for example, in a coffee beverage, such as a latte, cappuccino, flat white, and so on.

In order to provide heating, the temperature control system may include a heating element, such as a resistive or inductive heating element, for heating the chamber 102. Other types of element for controlling the temperature of the chamber 102 can also be contemplated, such as a Peltier element. It is noted that such a Peltier element may provide cooling, e.g. as well as heating, to the chamber 102.

More generally, the milk frother 100 comprises a pressure control system 112 for adjusting pressure in the chamber, e.g. in the sealed chamber 102. Sealing of the chamber 102 may facilitate pressure adjustment in the chamber 102 via the pressure control system 112.

It has been found that adjusting pressure in the sealed container 102 can provide enhanced control over characteristics of the frothed milk, in particular the nature, e.g. size, of bubbles in the frothed milk. This enhanced control over characteristics of the frothed milk is explained in more detail herein below with reference to various non-limiting illustrative examples.

In some embodiments, the pressure control system 112 is configured to enable user-selection of different pressures in the sealed chamber 102. By permitting the user to select the pressure in the sealed chamber 102, the user may be provided with enhanced control over the characteristics of the frothed milk. In this way, the user may be enabled to, for example, select the characteristics of the frothed milk, according to the type of beverage they wish to make, for example latte, cappuccino, flat white, and so on.

It is noted at this point that the chamber 102 can be sealed in any suitable manner in order to facilitate pressure adjustment in the chamber 102. In some embodiments, such as shown in FIG. 1, a sealing member 114 is interposed between the chamber wall 104 and the closing member 106 to seal the chamber 102 when the closing member 106 is positioned to close the chamber 102.

The sealing member 114 can be of any suitable type. For example, the sealing member 114 may include one or more O-rings, flat gasket(s), etc.

The pressure control system 112 may include a pump 116, such as a vacuum pump 116, to adjust the pressure in the sealed chamber 102. Such a pump 116, e.g. vacuum pump 116, may be operable to provide an under-pressure in the sealed chamber 102. The term "under-pressure" is intended to refer to a partial vacuum in the sealed chamber 102, e.g. in a head space above the milk received in the sealed chamber 102.

In such embodiments, the characteristics of the frothed milk may be controllable by operating the milk frothing system, e.g. by moving the agitator 108, while the under-pressure is provided in the sealed chamber 102 to provide frothed milk, with subsequent release of the under-pressure causing densification of the frothed milk, e.g. so as to provide a foam at ambient pressure having smaller bubbles.

It is noted, more generally, that the milk frothing system may be operable, e.g. by the agitator 108 being moveable inside the chamber 102, at least when the chamber 102 is sealed. In this manner, the milk frothing system may froth the milk received in the sealed chamber 102 while the pressure is adjusted via the pressure control system 112.

In some embodiments, the milk frother 100 comprises an under-pressure release system controllable to release the under-pressure, e.g. following operation of the milk frothing system while the under-pressure is provided in the sealed chamber 102. The under-pressure release system may, for example, include a valve that is controllable to introduce gas, e.g. ambient air, into the chamber 102. Alternatively or additionally, the under-pressure release system may include a control system configured to control the pump 116 to pump gas, e.g. air, back into the chamber 102. This may be achievable by, for example, the control system reversing polarity of an electrical motor that drives the pump 116.

As well as causing densification of the frothed milk, this under-pressure release may facilitate opening of the chamber 102 to access the frothed milk, for example by moving the closing member 106 relative to the chamber wall 104.

The pressure control system 112, e.g. the pump 116, may be operable to provide a pressure in the sealed chamber 102 that is less than 1 bar absolute, preferably between 0.01 and 0.95 bar absolute, more preferably between 0.1 and 0.8 bar absolute, and most preferably between 0.1 and 0.5 bar absolute. Enhanced control over characteristics of, e.g. bubble size in, the frothed milk has been found by employing such pressures in the sealed chamber 102.

The pressure control system 112 may be configured in any suitable manner, for instance by comprising a pump 116, e.g. vacuum pump 116, in order to enable adjustment of the pressure in the sealed chamber 102. In some embodiments, the pressure control system 112 comprises an expandable container in fluid communication with the sealed chamber 102, with expansion of the container causing reduction of pressure in the sealed chamber 102. This may provide a relatively straightforward way of adjusting the pressure in the sealed chamber 102. Moreover, the under-pressure in the sealed chamber 102 may be user-selectable by controlling a degree of expansion of the container.

The expandable container may, for example, be defined by a tube, e.g. a syringe barrel, and a plunger that is moveable along the tube.

The pressure control system 112 may further comprise a valve assembly, e.g. comprising a pair of check valves, to enable expansion of the container to be adjusted in order to enable selection of the under-pressure in the sealed chamber 102, e.g. by moving the plunger along the tube.

This may provide a relatively straightforwardly implementable way of configuring the pressure control system 112 to enable user-selection of different pressures in the sealed chamber 102.

In some embodiments, the pressure control system 112 comprises a pressure measurement device 118 for indicating pressure in the chamber 102, e.g. in the sealed chamber 102. The pressure measurement device 118 may provide an indication of characteristics of the frothed milk, e.g. foam, being prepared by the milk frother 100. For example, the output of the pressure measurement device 118 may provide an indicator of foam structure. This may be due to the pressure measurement device 118, e.g. manometer, indicating a difference in pressure between the inside of the sealed chamber 102 and the atmosphere in which the milk frother 100 is being used, which difference in pressure may determine the nature, e.g. size, of the bubbles in the frothed milk provided following release of the pressure.

Alternatively or additionally, the output provided by the pressure measurement device 118 may be used as a basis on which to adjust the pressure, e.g. under-pressure, provided in the sealed chamber 102.

Any suitable type of pressure measurement device 118 may be employed for this purpose. In some embodiments, the pressure measurement device 118 comprises a manometer.

In some embodiments, the adjustment of the pressure, e.g. under-pressure, in the sealed chamber 102 may be manual, by the output of the pressure measurement device 118, e.g. manometer, being communicated to the user, and the user manually adjusting the pressure control system 112, e.g. the expansion of the container, based on the output.

Alternatively or additionally, the pressure control system 112 may be configured to receive the output of the pressure measurement device 118, e.g. manometer, and automatically adjust the pressure control system 112, for example the expansion of the container, e.g. via control over a motorized syringe pump, based on the output.

In some embodiments, such as shown in FIG. 1, the pressure control system 112, e.g. including the pump 116 and the pressure measurement device 118, are mounted at the closing member 106, e.g. lid.

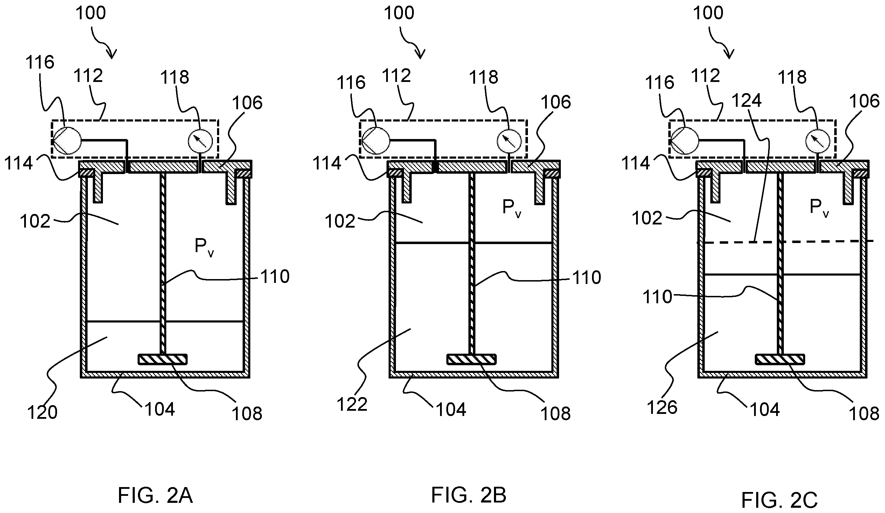

FIGs. 2A to 2C schematically depict a method of frothing milk 120 according to a non-limiting example. The method may utilize the milk frother 100 shown in FIG. 1. In FIG. 2A, milk to be frothed 120 is shown received in the sealed chamber 102, which in this case is sealed via the sealing member 114, e.g. O-ring(s), flat gasket(s) etc., between the chamber wall 104 and the closing member 106.

In an initial step, the pressure is adjusted, which in this example involves using a vacuum pump 116 included in the pressure control system 112 to partially evacuate the sealed chamber 102 and thereby provide an under-pressure in the sealed chamber 102. This may involve reduction of the pressure, Pᵥ, in the head space above the milk 120 from atmospheric pressure, e.g. about 1 bar, to a pressure in the range of 0.1 to 0.8 bar, e.g. about 0.5 bar.

Referring to FIG. 2B, the agitator 108 may be moved, e.g. rotated by the motor, to produce frothed milk 122, e.g. in the form of relatively coarse foam having larger bubbles, while the under-pressure, e.g. a pressure of about 0.5 bar, is being provided in the sealed chamber 102. As schematically shown in FIG. 2B, agitation of the milk 120 may cause aeration of the milk 120 so that the frothed milk 122 occupies a greater volume than the milk 120 prior to agitation.

After the agitation, the pressure, in this case the under-pressure, provided in the chamber 102 may be released, in this example by the chamber 102 being returned to ambient/atmospheric pressure. In other words, the pressure in the chamber 102 may increase from about 0.5 bar back to about 1 bar. This is schematically illustrated in FIG. 2C.

This pressure change may cause bubbles in the frothed milk 122, e.g. milk emulsion, to shrink. The dotted line 124 in FIG. 2C indicates the volume of the frothed milk 122 prior to shrinkage. The final frothed milk 126, e.g. in the form of relatively fine foam having smaller bubbles, can then be used. For instance, the final frothed milk 126 may be removed from the chamber 102 and included in a beverage, e.g. a coffee beverage.

### Experimental examples

A prototype milk frother 100 was fabricated by modifying a Philips Senseo Milk Twister by forming a first hole in the device's lid 106 for connecting the chamber 102 via tubing to a manual pump 116, comprising a syringe and a pair of check valves, for accurately controlling the pressure, Pᵥ, in the head space above the milk. A second hole was formed in the lid 106 for connecting the chamber 102 via tubing to a pressure measurement device 118 in the form of a pressure sensor arranged to log the pressure, Pᵥ, over time. Sealed connections were made between the above-mentioned tubing and the lid 106, and a sealing member 114 in the form of an O-ring was arranged between the lid 106 and the device's jug 104 to seal the chamber 102.

Milk was frothed using this prototype milk frother 100 using the procedure described above in relation to FIGs. 2A to 2C but using various pressures in the sealed chamber 102 during agitation of the milk 120. The texture of the final frothed milk 126 was assessed in relation to how easily pourable the final frothed milk 126 was and how clearly a pattern of the frothed milk 126 could be seen when the frothed milk 126 was added to a coffee beverage so as to form a latte art-type tulip pattern. The results are presented in the following table:

| Test Number | Pressure/bar | Texture of frothed milk 126 |
|---|---|---|
| 1 | 0.1 | Very fine foam; very easily pourable; very well-defined foam pattern |
| 2 | 0.2 | Fine foam; easily pourable; well-defined foam pattern |
| 3 | 0.3 | Moderately fine foam; pourable; mostly defined foam pattern |
| 4 | 0.4 | Pourable and plainly evident foam pattern |
| 5 | 0.5 | Pourable but less defined foam pattern |
| 6 | 0.6 | Pourable but foam pattern poorly defined |
| 7 | 0.7 | Pourable but foam pattern almost indistinct |
| 8 | 0.8 | Coarse foam; lowest pourability; no foam pattern evident |

A decrease in pourability was clearly observed from the lowest pressure of 0.1 bar to the highest pressure in the sealed chamber 102 of 0.8 bar.

These results demonstrate that the milk frother 100 according to the present disclosure enables control over characteristics, e.g. foam texture, of the frothed milk. Pressure adjustment may, in particular, provide control over the texture of milk foam, from coarse to very fine.

Depending on the under-pressure (relative to ambient pressure), the bubble size in the frothed milk 126 can be controlled. A relatively large under-pressure (e.g. about 0.1 bar absolute) has been shown to lead to frothed milk 126 whose bubbles/texture means that the milk frother 100 can be used to prepare a well-known microfoam (barista foam). Frothing at ambient pressure provides coarse, scoopable, foam. An under-pressure between 0.1 and 1 bar absolute may tune the bubble size so as to provide frothed milk 126 spanning a range of textures between coarse and very fine.

To the inventor's knowledge, no milk frothing system currently on the market is capable of providing both coarse foam and pourable microfoam, as well as providing both cold and warm froth possibilities. Indeed, such conventional milk frothing systems may be dedicated to producing a single milk texture only.

Various benefits may stem from the milk frother 100 according to the present disclosure, such as provision of a single device capable of preparing various milk textures, e.g. from barista foam to scoopable foam; no special skill on the part of the user, e.g. the average unpracticed consumer, may be required; decrease in minimum attainable bubble size may assist to increase foam stability, the milk frother 100 may be employed to froth milk of different types and to provide frothed milk 126 at different temperatures; and/or switching between foam textures may be straightforwardly implementable in embodiments in which the pressure is user-selectable, e.g. with a single click.

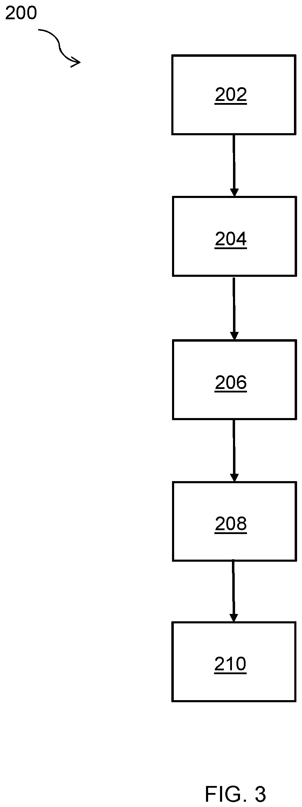

FIG. 3 provides a flow chart of a milk frothing method 200 according to an example. The method 200 comprises receiving 202 milk to be frothed in a chamber 102, adjusting pressure 206 in the chamber 102, and frothing 208 the milk by agitating the milk in the chamber 102 in which the pressure is adjusted, e.g. using a mechanical milk frothing system, e.g. an agitator 108-comprising mechanical milk frothing system, of the type described above. These steps may be implemented in any suitable order.

In some embodiments, the method 200 comprises sealing 204 the chamber 102 so that the pressure is adjusted in the sealed chamber 102.

More generally, the method 200 may be implemented using the milk frother 100 according to any of the embodiments described herein.

In some embodiments, adjusting 206 the pressure in the sealed chamber 102 comprises providing an under-pressure in the sealed chamber 102.

In some embodiments, such as shown in FIG. 3, the method 200 comprises releasing 210 the under-pressure following the frothing 208 of the milk that is implemented via agitation. Release 210 of the under-pressure may cause densification of the frothed milk already prepared by agitating the milk while the under-pressure is provided in the sealed chamber 102, e.g. so as to provide a foam at ambient pressure having smaller bubbles. In this manner, more pourable foam may be prepared, as previously described.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

If the term "adapted to" is used in the claims or description, it is noted the term "adapted to" is intended to be equivalent to the term "configured to".

Any reference signs in the claims should not be construed as limiting the scope.

## Claims

1. A milk frother (100) comprising:
a chamber (102) for receiving milk to be frothed;
a milk frothing system for frothing the milk received in the chamber; and
a pressure control system (112) for adjusting pressure in the chamber, wherein the chamber is sealable to enable the pressure control system to adjust pressure in the sealed chamber.

2. The milk frother (100) according to claim 1, wherein the pressure control system (112) comprises a pump (116) operable to provide an under-pressure in the chamber (102).

3. The milk frother (100) according to claim 1 or claim 2, comprising a pressure release system controllable to release the pressure in the chamber.

4. The milk frother (100) according to any one of claims 1 to 3, wherein the pressure control system (112) is configured to enable user-selection of different pressures in the chamber (102).

5. The milk frother (100) according to any one of claims 1 to 4, wherein the pressure control system (112) is operable to provide a pressure in the sealed chamber (102) that is less than 1 bar absolute, preferably between 0.01 and 0.95 bar absolute, more preferably between 0.1 and 0.8 bar absolute, and most preferably between 0.1 and 0.5 bar absolute.

6. The milk frother (100) according to any one of claims 1 to 5, wherein the pressure control system (112) comprises an expandable container in fluid communication with the chamber (102), expansion of the container causing reduction of pressure in the sealed chamber.

7. The milk frother (100) according to claim 6, wherein the expandable container is defined by a tube and a plunger that is moveable along the tube.

8. The milk frother (100) according to any one of claims 1 to 7, wherein the pressure control system (112) comprises a pressure measurement device (118) for indicating pressure in the chamber (102).

9. The milk frother (100) according to claim 8, wherein the pressure measurement device (118) comprises a manometer.

10. The milk frother (100) according to any one of claims 1 to 9, wherein the chamber (102) is delimited by a chamber wall (104) and a closing member (106) that is moveable relative to the chamber wall to enable the chamber to be opened and closed, wherein the chamber is sealable via a sealing member (114) between the chamber wall and the closing member.

11. The milk frother (100) according to any one of claims 1 to 10, wherein the milk frothing system comprises a mechanical milk frothing system.

12. A beverage machine comprising the milk frother (100) according to any one of claims 1 to 11; optionally wherein the beverage machine comprises coffee brewing apparatus.

13. A method (200) of frothing milk comprising:
receiving (202) milk to be frothed in a chamber;
adjusting (206) pressure in the chamber; and
frothing (208) the milk by agitating the milk in the chamber in which the pressure is adjusted; wherein the method comprises sealing (204) the chamber so that the pressure is adjusted in the sealed chamber, and/or wherein the frothing comprises using a mechanical milk frothing system to froth the milk.

14. The method (200) according to claim 13, wherein adjusting (206) the pressure in the sealed chamber comprises providing an under-pressure in the chamber.

15. The method (200) according to claim 14, comprising releasing (210) the under-pressure following said frothing (208) of the milk.
